# FASCICULE DE BREVET EUROPEEN

(11) **EP 1 518 827 B1**
(45) Date de publication et mention de la délivrance du brevet: **19.09.2007**
(21) Numéro de dépôt: 04291576.9
(22) Date de dépôt: 21.06.2004
(51) Int. Cl.: C01B 39/46, C01B 39/48

(54) **Solide cristallisé IM-12 et son procédé de préparation**
Kristallinisches Material IM-12 und Verfahren zu seiner Herstellung
Cristalline material IM-12 and process for its manufacture

(30) Priorité: 26.09.2003 FR 0311333
(43) Date de publication de la demande: 30.03.2005
(73) Titulaire: Institut Français du Pétrole, 92852 Rueil-Malmaison Cedex (FR)
(72) Inventeur: Harbuzaru, Bogdan, 38200 Vienne (FR); Paillaud, Jean-Louis, 68100 Mulhouse (FR); Patarin, Jöel, 68720 Flaxlanden (FR); Bats, Nicolas, 69590 Pomeys (FR)

(56) Documents cités:
- EP-A- 1 364 913
- WO-A-98/29337
- GB-A- 2 023 562
- US-A- 4 834 958
- US-A- 4 910 006
- US-A- 6 080 382

## Description

La présente invention se rapporte à un nouveau solide cristallisé appelé ci-après IM-12 présentant une nouvelle structure cristalline ainsi qu'au procédé de préparation dudit solide.

### Art antérieur

La recherche de nouveaux tamis moléculaires microporeux a conduit au cours des dernières années à la synthèse d'une grande variété de cette classe de produits. Une grande variété d'aluminosilicates à structure zéolithique caractérisés notamment par leur composition chimique, le diamètre des pores qu'ils contiennent, la forme et la géométrie de leur système microporeux a ainsi été développée.

Parmi les zéolithes synthétisées depuis une quarantaine d'années, un certain nombre de solides ont permis de réaliser des progrès significatifs dans les domaines de l'adsorption et de la catalyse. Parmi celles-ci, on peut citer la zéolithe Y (US 3,130,007) et la zéolithe ZSM-5 (US 3,702,886). Le nombre de nouveaux tamis moléculaires, recouvrant les zéolithes, synthétisés chaque année est en progression constante. Pour avoir une description plus complète des différents tamis moléculaires découverts, on peut utilement se référer à l'ouvrage suivant: "Atlas of Zeolites Structure Types", Ch. Baerlocher, W.M. Meier and D.H. Olson, Fifth Revised Edition, 2001, Elsevier. On peut citer la zéolithe NU-87 (US-5,178,748), la zéolithe MCM-22 (US-4,954,325) ou bien encore le gallophosphate (clovérite) de type structural CLO (US-5,420,279), ou encore les zéolithes ITQ-12 (US-6,471,939), ITQ-13 (US-6,471,941), CIT-5 (US-6,043,179), ITQ-21 (WO-02/092511), ITQ-22 (Corma, A. et al, Nature Materials 2003, 2, 493) SSZ-53 (Burton, A., et al, Chemistry: a Eur. Journal , submitted), SSZ-59 (Burton, A., et al, Chemistry: a Eur. Journal , submitted), SSZ-58 (Burton, A., et al, J. Am. Chem. Soc., 2003, 125, 1633) et UZM-5 (Blackwell, C.S. et al, Angew. Chem., Int. Ed. , 2003, 42 , 1737).

Plusieurs des zéolithes précédemment citées ont été synthétisées en milieu fluorure dans lequel l'agent mobilisateur n'est pas l'ion hydroxyde habituel mais l'ion fluorure selon un procédé initialement décrit par J.-L. Guth et al. (Proc. Int. Zeol. Conf., Tokyo, 1986, p. 121). Les pH des milieux de synthèses sont typiquement proche de la neutralité. Un des avantages de ces systèmes réactionels fluorés est de permettre l'obtention de zéolithes purement siliciques contenant moins de défauts que les zéolithes obtenues en milieu OH⁻ traditionnel (J.M. Chézeau et al., Zéolites, 1991, 11, 598). Un autre avantage décisif lié à l'utilisation de milieux réactionnels fluorés est de permettre l'obtention de nouvelles topologies de charpente contenant des doubles cycles à quatre tétraèdres comme c'est le cas des zéolithes ITQ-7, ITQ-13, ITQ-17. Cependant, l'utilisation conjointe de sources de germanium et de silicium dans les milieux de synthèse peut permettre l'obtention de telles charpentes en milieu basique classique non fluoré comme dans le cas des zéolithe ITQ-17 et ITQ-21 (A. Corm et al, Chem. Commun., 2001, 16, 1486, Chem. Commun., 2003, 9, 1050).

### Description de l'invention

La présente invention se rapporte à un nouveau solide cristallisé, appelé solide cristallisé IM-12, présentant une nouvelle structure cristalline. Ledit solide présente une composition chimique exprimée sur une base anhydre, en termes de mole d'oxydes, définie par la formule générale suivante : XO₂ : m YO₂ : p Z₂O₃ : q R_{2/n}O (I) dans laquelle R représente un ou plusieurs cation(s) de valence n, X représente un ou plusieurs élément(s) tétravalent(s) différent(s) du germanium, Y représente le germanium, Z représente au moins un élément trivalent, m, p, q, représentant respectivement le nombre de mole de YO₂, Z₂O₃ et R_{2/n}O et m est compris entre 0 et 1, p est compris entre 0 et 0,5, q est compris entre 0 et 0,7.

Le solide cristallisé IM-12 selon l'invention présente, sous sa forme brute de synthèse, un diagramme de diffraction de rayons X incluant au moins les raies inscrites dans le tableau 1. Le solide cristallisé IM-12 selon l'invention présente, sous sa forme calcinée, un diagramme de diffraction de rayons X incluant au moins les raies inscrites dans le tableau 2. Ce nouveau solide cristallisé IM-12 présente une nouvelle structure cristalline.

Ces diagrammes de diffraction sont obtenus par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'estimation de l'erreur de mesure Δ(dₕₖₗ) sur dₕₖₗ se calcule par la relation de Bragg en fonction de l'erreur absolue Δ(2θ) affectée à la mesure de 2θ. Une erreur absolue Δ(2θ) égale à ± 0,2° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé IM-12 selon l'invention, sous sa forme brute de synthèse, comporte au moins les raies aux valeurs de dₕₖₗ données dans le tableau 1. Le diagramme de diffraction des rayons X du solide cristallisé IM-12 selon l'invention, sous sa forme calcinée, comporte au moins les raies aux valeurs de dₕₖₗ données dans le tableau 2. Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,2Å et ± 0,008Å.

**Tableau 1 : Valeurs moyennes des dₕₖₗ et intensités relatives mesurées sur un diagramme de diffraction de rayons X du solide cristallisé IM-12 brut de synthèse**

| dₕₖₗ (Å) | 2 thêta (°) | I/I₀ |
|---|---|---|
| 14,20 | 6,22 | mf |
| 12,51 | 7,06 | FF |
| 11,93 | 7,41 | mf |
| 10,65 | 8,30 | mf |
| 9,19 | 9,62 | mf |
| 8,16 | 10,83 | ff |
| 7,83 | 11,28 | ff |
| 7,10 | 12,45 | mf |
| 6,97 | 12,68 | ff |
| 6,26 | 14,14 | ff |

**Tableau 2 : Valeurs moyennes des dₕₖₗ et intensités relatives mesurées sur un diagramme de diffraction de rayons X du solide cristallisé IM-12 calciné**

| dₕₖₗ (Å) | 2 thêta (°) | I/I₀ |
|---|---|---|
| 14,40 | 6,13 | FF |
| 12,60 | 7,00 | F |
| 11,98 | 7,37 | f |
| 10,69 | 8,27 | f |
| 9,22 | 9,58 | f |
| 8,22 | 10,76 | ff |
| 7,91 | 11,17 | ff |
| 7,37 | 12,00 | ff |
| 7,19 | 12,29 | ff |
| 7,00 | 12,64 | ff |
| 6,30 | 14,05 | ff |
| 6,12 | 14,46 | ff |
| 5,98 | 14,80 | ff |
| 5,66 | 15,64 | ff |
| 5,32 | 16,65 | ff |
| 5,18 | 17,10 | ff |
| 5,07 | 17,48 | ff |
| 5,02 | 17,65 | ff |
| 4,60 | 19,28 | ff |
| 4,56 | 19,45 | ff |
| 4,36 | 20,35 | ff |
| 4,24 | 20,93 | ff |
| 4,19 | 21,19 | ff |
| 4,14 | 21,45 | ff |
| 4,06 | 21,87 | ff |
| 3,98 | 22,29 | ff |
| 3,95 | 22,47 | ff |
| 3,93 | 22,60 | ff |
| 3,91 | 22,68 | ff |
| 3,75 | 23,69 | ff |
| 3,72 | 23,88 | ff |
| 3,68 | 24,14 | ff |
| 3,62 | 24,56 | ff |
| 3,59 | 24,73 | ff |
| 3,53 | 25,16 | ff |
| 3,49 | 25,47 | ff |
| 3,39 | 26,20 | ff |
| 3,35 | 26,55 | ff |
| 3,28 | 27,11 | ff |
| 3,23 | 27,52 | ff |

| | | |
|---|---|---|
| où FF = très fort ; m = moyen ; f = faible ; F = fort ; mf = moyen faible ; ff = très faible. | | |

L'intensité relative I/I₀ est donnée en rapport à une échelle d'intensité relative où il est attribué une valeur de 100 à la raie la plus intense du diagramme de diffraction des rayons X: ff <15 ; 15 ≤f<30 ; 30≤ mf<50 ; 50 ≤m < 60 ; 60 ≤F< 85 ; FF≥ 85.

La raie la plus intense (I/I0 = 100) sur le diagramme de diffraction de rayons X du solide cristallisé IM-12 calciné est celle pour laquelle 2 thêta = 6,13° et dₕₖₗ = 14,40 Å. La raie pour laquelle 2 thêta = 7,00° présente une intensité relative I/I0 comprise entre 60 et 85. De préférence, l'intensité relative de la raie à 2 thêta = 7,00° représente entre 62 et 68% de celle de la raie la plus intense.

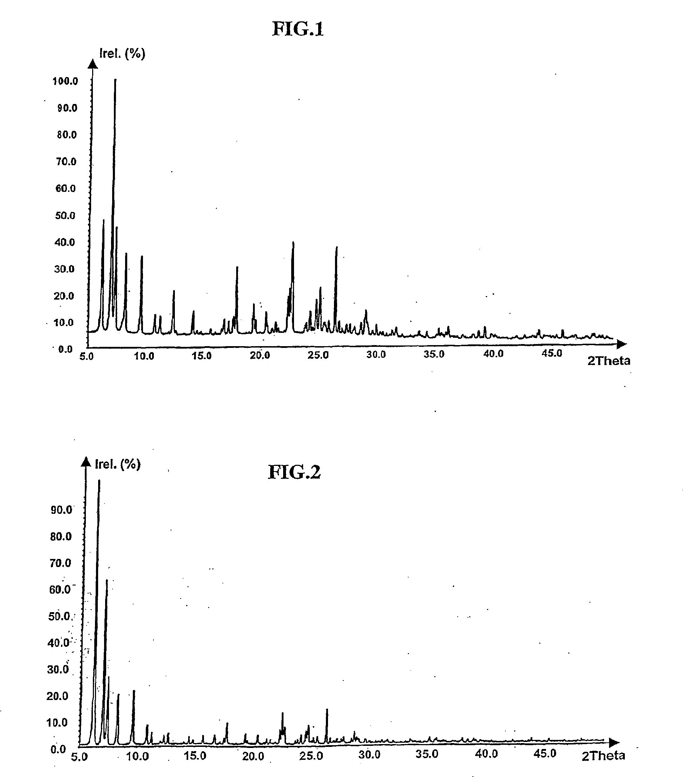

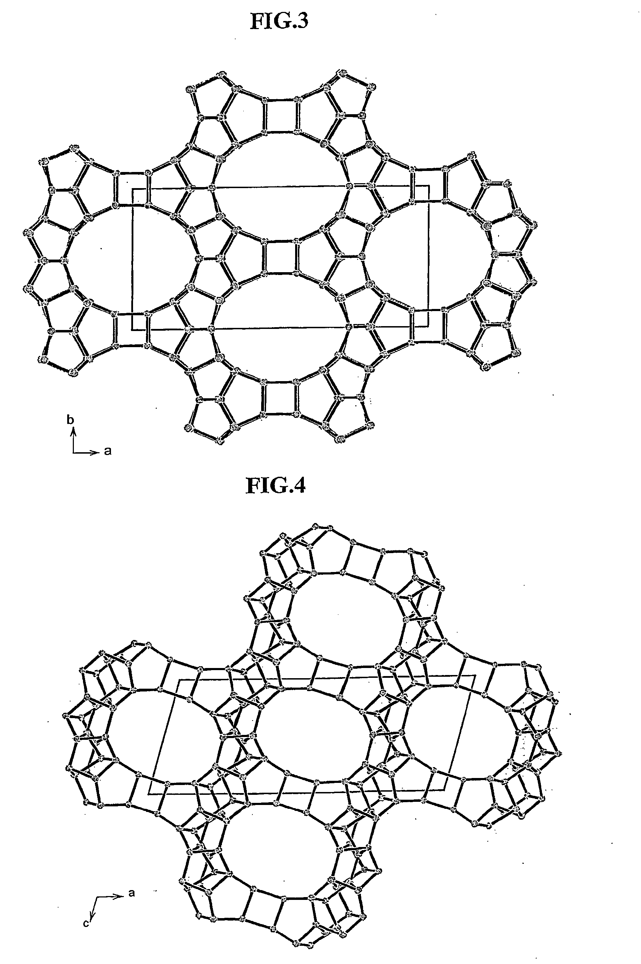

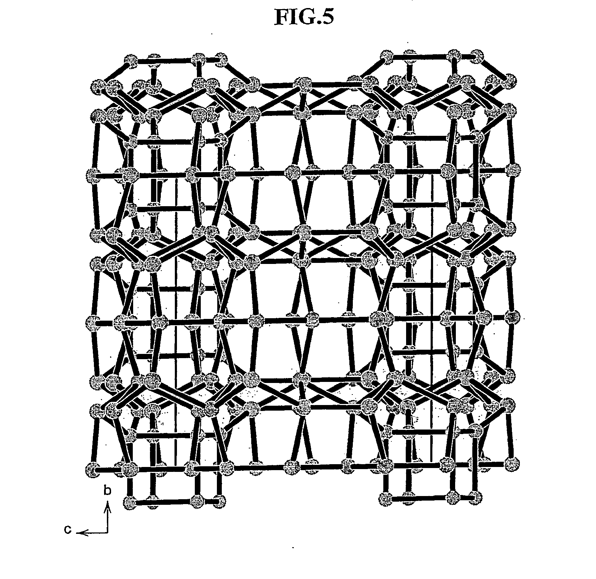

Le solide cristallisé IM-12 selon l'invention présente une nouvelle structure cristalline de base ou topologie qui est caractérisée par ses diagrammes de diffraction X sous les formes brute de synthèse et calcinée donnés par les figures 1 et 2 respectivement. La nouvelle structure cristalline du solide cristallisé IM-12 selon l'invention est une structure tridimentionnelle formée de tétraèdres. La figure 3 représente une projection de la structure du solide IM-12 selon [001]. La figure 4 représente une projection de la structure du solide IM-12 selon [010]. La figure 5 représente une projection de la structure du solide IM-12 selon [100]. Elle comprend notamment des unités de type double cycles à quatre tétraèdres. Le sommet de chaque tétraèdre est occupé par un atome d'oxygène. Le solide cristallisé IM-12 selon l'invention possède une nouvelle topologie avec un système de canaux bidimensionnel interconnectés comprenant deux types de canaux droits définis par des ouvertures à 14 et 12 atomes X et/ou Y et/ou Z respectivement, lesdits atomes étant en coordinence 4, c'est-à-dire entourés de quatre atomes d'oxygène (Figures 3 et 4). La projection sur l'axe cristallographique a de la structure IM-12 (figure 5) illustre bien l'aspect fermé selon cette direction.

Ledit solide IM-12 présente une composition chimique, exprimée sur une base anhydre, en termes de mole d'oxydes, définie par la formule générale suivante : XO₂ : m YO₂ : p Z₂O₃ : q R_{2/n}O : (I) dans laquelle R représente un ou plusieurs cation(s) de valence n, X représente un ou plusieurs élément(s) tétravalent(s) différent(s) du germanium, Y représente le germanium et Z représente au moins un élément trivalent. Dans la formule (I), m, p, q, représentent respectivement le nombre de mole de YO₂, Z₂O₃, R_{2/n}O et m est compris entre 0 et 1, p est compris entre 0 et 0,5, q est compris entre 0 et 0,7.

Avantageusement, le rapport Ge/X de la charpente du solide cristallisé IM-12 selon l'invention est compris entre 0,02 et 1 et de préférence entre 0,05 et 0,33. De manière préférée, m est compris entre 0,05 et 1 et de manière encore plus préférée, m est compris entre 0,05 et 0,5. Le rapport {(1+m)/p} est supérieur ou égal à 5 et est de manière préférée supérieur ou égal à 7. La valeur de p est préférentiellement comprise entre 0 et 0,5, très préférentiellement comprise entre 0 et 0,4 et de manière encore plus préférée comprise entre 0,01 et 0,4. Les valeurs de q sont avantageusement comprises entre 0,01 et 0,7 et très avantageusement comprises entre 0,1 et 0,5.

Conformément à l'invention, X est préférentiellement choisi parmi le silicium, l'étain et le titane, et Z est préférentiellement choisi parmi l'aluminium, le bore, le fer, l'indium et le gallium et très préférentiellement Z est l'aluminium. De manière préférée, X est le silicium : le solide cristallisé IM-12 selon l'invention est alors un métallosilicate cristallisé présentant un diagramme de diffraction des rayons X identique à celui décrit dans le tableau 1 lorsqu'il se trouve sous sa forme brute de synthèse et identique à celui décrit dans le tableau 2 lorsqu'il se trouve sous sa forme calcinée. De manière encore plus préférée, X est le silicium et Z est l'aluminium : le solide cristallisé IM-12 selon l'invention est alors un aluminosilicate cristallisé présentant un diagramme de diffraction des rayons X identique à celui décrit dans le tableau 1 lorsqu'il se trouve sous sa forme brute de synthèse et identique à celui décrit dans le tableau 2 lorsqu'il se trouve sous sa forme calcinée.

Dans le cas où le solide cristallisé IM-12 selon l'invention se présente sous sa forme brute de synthèse, c'est-à-dire directement issu de la synthèse et préalablement à toute étape de calcination(s) et/ou d'échange(s) d'ions bien connue de l'Homme du métier, ledit solide IM-12 comporte au moins un cation organique azoté tel que celui décrit ci-après ou ses produits de décomposition, ou encore ses précurseurs. Sous forme brute de synthèse, le (ou les) cation(s) R présentes) dans la formule (I) est(sont) au moins en partie, et de préférence entièrement, le(s)dit(s) cation(s) organique(s) azoté(s). Selon un mode préféré de l'invention, R est le cation (6*R*,10*S*)-6,10-diméthyl-5-azoniaspiro[4.5]décane. Le structurant peut être éliminé par les voies classiques de l'état de la technique comme des traitements thermiques et/ou chimiques.

Le solide cristallisé IM-12 selon l'invention est de préférence un solide zéolithique.

L'invention concerne également un procédé de préparation du solide cristallisé IM-12 dans lequel on fait réagir un mélange aqueux comportant au moins une source d'au moins un oxyde XO₂, éventuellement au moins une source de l'oxyde YO₂, éventuellement au moins une source d'au moins un oxyde Z₂O₃ et au moins un cation organique azoté R, ou au moins un précurseur du cation organique azoté ou au moins un produit de décomposition du cation organique azoté, le mélange présentant préférentiellement la composition molaire suivante :

| | |
|---|---|
| (XO₂+YO₂)/Z₂O₃ | :au moins 5, de préférence au moins 7, |
| H₂O/(XO₂+YO₂) | :1 à 50, de préférence 2 à 30, |
| R/(XO₂+YO₂) | :0,1 à 3, de préférence 0,1 à 1, |
| YO₂/XO₂ | :0 à 1, de préférence 0,5 à 1, |

où X est un ou plusieur(s) élément(s) tétravalent(s) différent(s) du germanium, de préférence le silicium, Y est le germanium, Z est un ou plusieurs élément(s) trivalent(s) choisi(s) dans le groupe formé par les éléments suivants : aluminium, fer, bore, indium et gallium, de préférence l'aluminium.

Conformément au procédé selon l'invention, R est un structurant organique azoté. Préférentiellement, R est le composé cationique organique azoté (6*R*,10*S*)-6,10-diméthyl-5-azoniaspiro[4.5]décane. Il s'agit préférentiellement du sel de (6*R*,10*S*)-6,10-diméthyl-5-azoniaspiro[4.5]décane de préférence sous forme hydroxyde.

La source de l'élément X peut être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale ou de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX". De manière préférée, la source de silicium est le LUDOX.

La source de l'élément Z peut être tout composé comprenant l'élément Z et pouvant libérer cet élément en solution aqueuse sous forme réactive. Dans le cas préféré où Z est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

La source d'élément Y pourra être par exemple un oxyde de germanium GeO₂.

Selon un mode de réalisation préféré du procédé selon l'invention, on fait réagir un mélange aqueux comportant de la silice, de l'alumine, un oxyde de germanium et de l'hydroxyde de (6*R*,10*S*)-6,10-diméthyl-5-azoniaspiro[4.5]décane.

Le procédé selon l'invention consiste à préparer un mélange réactionnel aqueux appelé gel et renfermant au moins une source d'au moins un oxyde XO₂, éventuellement au moins une source de l'oxyde YO₂, éventuellement au moins une source d'au moins un oxyde Z₂O₃ et au moins un cation organique azoté R, ou au moins un précurseur du cation organique azoté ou au moins un produit de décomposition du cation organique azoté. Les quantités desdits réactifs sont ajustées de manière à conférer à ce gel une composition permettant sa cristallisation en solide cristallisé IM-12 de formule XO₂ : m YO₂ : p Z₂O₃ : q R_{2/n}O , où m, p, q et n répondent aux critères définis plus haut. Puis le gel est soumis à un traitement hydrothermal jusqu'à ce que le solide cristallisé IM-12 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore préférentielle à une température qui ne dépasse pas 175°C jusqu'à la formation des cristaux de solide IM-12 selon l'invention. La durée nécessaire pour obtenir la cristallisation varie généralement entre 1 heure et plusieurs mois en fonction de la composition des réactifs dans le gel, de l'agitation et de la température de réaction. La mise en réaction s'effectue généralement sous agitation ou en absence d'agitation, de préférence en présence d'agitation.

Il peut être avantageux d'additionner des germes au mélange réactionnel afin de réduire le temps nécessaire à la formation des noyaux et/ou la durée totale de cristallisation. Il peut également être avantageux d'utiliser des germes afin de favoriser la formation du solide cristallisé IM-12 au détriment d'impuretés. De tels germes comprennent des solides cristallisés, notamment des cristaux de solide IM-12. Les germes cristallins sont généralement ajoutés dans une proportion comprise entre 0,01 et 10 % du poids de l'oxyde XO₂, de préférence de la silice, utilisé dans le mélange réactionnel.

A la fin de la réaction, la phase solide est filtrée et lavée; elle est ensuite prête pour des étapes ultérieures telles que le séchage, la déshydratation et la calcination et/ou l'échange d'ions. Pour ces étapes, toutes les méthodes conventionnelles connues de l'homme du métier peuvent être employées.

L'étape de calcination s'effectue avantageusement par une ou plusieurs étapes de chauffage à des températures allant de 100 à 1000°C pour des durées allant de quelques heures à plusieurs jours. De manière préférée, la calcination s'effectue en deux étapes de chauffage consécutives, la première étant réalisée à une température comprise entre 100 et 300°C et la deuxième étant réalisée à une température comprise entre 400°C et 700°C, la température étant maintenue cinq à dix heures à chaque étape.

L'invention est illustrée au moyen des exemples suivants.

### Exemple 1 :

On verse dans un bécher 5,78g de solution aqueuse à 20% d'hydroxyde de (6*R*,10*S*)-6,10-dimethyl-5-azoniaspiro[4.5]décane (ROH) et 0,872g d'oxyde de germanium amorphe (Aldrich). Après dissolution sous agitation de l'oxyde, 2,5g de silice colloïdale (Ludox HS-40 (Aldrich)) et 6,626g d'eau sont ajoutés. Après homogénéisation, le gel est ensuite transféré dans une chemise en téflon puis la chemise est placée dans un autoclave de 20 millilitres.

La composition molaire du gel correspondant est : 0.8 SiO₂: 0.4 GeO₂ : 0.3 ROH : 30 H₂O.

L'autoclave est chauffé pendant 6 jours à 170°C dans une étuve. Pendant la synthèse, l'autoclave est continuellement agité, l'axe longitudinal de l'autoclave tournant avec une vitesse d'environ 15 tours/minute dans un plan perpendiculaire à l'axe de rotation. Le pH de synthèse est proche de 12. Après filtration, le produit est lavé à l'eau distillée et séché à 70°C.

Le produit solide séché a été analysé par diffraction X de poudres et identifié comme étant constitué de solide IM-12. Le diffractogramme effectué sur l'échantillon brut de synthèse est donné par la figure 1. L'analyse chimique du produit par fluorescence X a été effectuée et donne le rapport SiO₂/GeO₂ = 4,35.

Dans une coupelle en céramique, on place environ 5 g de solide cristallisé IM-12 préparé comme décrit précédemment. A l'aide d'un four à moufles, cet échantillon est porté de la température ambiante à une température de 200°C à une vitesse de 5°C par minute. La température est maintenue pendant huit heures. La température est ensuite augmentée jusqu'à 550°C à la vitesse de 5°C par minute. Cette température est maintenue pendant huit heures.

Pendant toute la période de chauffage, un flux d'air constant est maintenu dans l'enceinte du four. Après cette période de chauffage, le chauffage est interrompu et on attend le retour à la température ambiante. On obtient alors le solide IM-12 sous sa forme calcinée de formule SiO₂ : 0,23 GeO₂. Le diffractogramme effectué sur le solide IM-12 calciné est donné par la figure 2.

### Exemple 2 :

On verse dans un bécher 5,78g de solution aqueuse à 20% d'hydroxyde de (6*R*,10*S*)-6,10-dimethyl-5-azoniaspiro[4.5]décane (ROH), 0,872g d'oxyde de germanium amorphe (Aldrich) et 0,021g d'oxyde d'aluminium (Aldrich). Après la dissolution sous agitation des oxydes, 2,5g de silice colloïdale (Ludox HS-40 (Aldrich)) et 6,626g eau sont ajoutés. Après homogénéisation, le gel est ensuite transféré dans une chemise en téflon puis la chemise est placée dans un autoclave de 20 millilitres. La composition molaire du gel correspondant est : 0.8 SiO₂ : 0.4 GeO₂ : 0.01 Al₂O₃ : 0.3 ROH : 30 H₂O. L'autoclave est chauffé pendant 6 jours à 170°C dans une étuve. Pendant la synthèse, l'autoclave est continuellement agité, l'axe longitudinal de l'autoclave tournant avec une vitesse d'environ 15 tours/minute dans un plan perpendiculaire à l'axe de rotation. Le pH de synthèse est proche de 12. Après filtration, le produit est lavé à l'eau distillée et séché à 70°C. Le produit solide séché a été analysé par diffraction X de poudres et identifié comme étant constitué de solide IM-12. Le diffractogramme effectué sur l'échantillon brut de synthèse est donné par la figure 1.

L'analyse chimique du produit par fluorescence X a été effectuée et donne le rapport SiO₂/GeO₂ = 4,25 et le rapport SiO₂/Al₂O₃ = 98.

Dans une coupelle en céramique, on place environ 5 g de solide cristallisé IM-12 préparé comme décrit précédemment. A l'aide d'un four à moufles, cet échantillon est porté de la température ambiante à une température de 200°C à une vitesse de 5°C par minute. La température est maintenue pendant huit heures. La température est ensuite augmentée jusqu'à 550°C à la vitesse de 5°C par minute. Cette température est maintenue pendant huit heures.

Pendant toute la période de chauffage, un flux d'air constant est maintenu dans l'enceinte du four. Après cette période de chauffage, le chauffage est interrompu et on attend le retour à la température ambiante. On obtient alors le solide IM-12 sous sa forme calcinée. Le diffractogramme effectué sur le solide IM-12 calciné est donné par la figure 2.

## Revendications

1. Solide cristallisé IM-12 présentant un diagramme de diffraction de rayons X incluant au moins les raies inscrites dans le tableau ci-dessous :
| dₕₖₗ (Å) | 2 thêta (°) | I/I₀ | dₕₖₗ (Å) | 2 thêta (°) | I/I₀ |
|---|---|---|---|---|---|
| 14,40 | 6,13 | FF | 4,36 | 20,35 | ff |
| 12,60 | 7,00 | F | 4,24 | 20,93 | ff |
| 11,98 | 7,37 | f | 4,19 | 21,19 | ff |
| 10,69 | 8,27 | f | 4,14 | 21,45 | ff |
| 9,22 | 9,58 | f | 4,06 | 21,87 | ff |
| 8,22 | 10,76 | ff | 3,98 | 22,29 | ff |
| 7,91 | 11,17 | ff | 3,95 | 22,47 | ff |
| 7,37 | 12,00 | ff | 3,93 | 22,60 | ff |
| 7,19 | 12,29 | ff | 3,91 | 22,68 | ff |
| 7,00 | 12,64 | ff | 3,75 | 23,69 | ff |
| 6,30 | 14,05 | ff | 3,72 | 23,88 | ff |
| 6,12 | 14,46 | ff | 3,68 | 24,14 | ff |
| 5,98 | 14,80 | ff | 3,62 | 24,56 | ff |
| 5,66 | 15,64 | ff | 3,59 | 24,73 | ff |
| 5,32 | 16,65 | ff | 3,53 | 25,16 | ff |
| 5,18 | 17,10 | ff | 3,49 | 25,47 | ff |
| 5,07 | 17,48 | ff | 3,39 | 26,20 | ff |
| 5,02 | 17,65 | ff | 3,35 | 26,55 | ff |
| 4,60 | 19,28 | ff | 3,28 | 27,11 | ff |
| 4,56 | 19,45 | ff | 3,23 | 27,52 | ff |
où FF = très fort ; m = moyen ; f = faible ; F = fort ; mf = moyen faible ; ff = très faible et présentant une composition chimique exprimée sur une base anhydre, en termes de mole d'oxydes, définie par la formule générale suivante XO₂ : m YO₂ : p Z₂O₃ : q R_{2/n}O dans laquelle R représente un ou plusieurs cation(s) de valence n, X représente un ou plusieurs élément(s) tétravalent(s) différent(s) du germanium, Y représente le germanium, Z représente au moins un élément trivalent, m, p, q, représentant respectivement le nombre de mole de YO₂, Z₂O₃ et R_{2/n}O et m est compris entre 0 et 1, p est compris entre 0 et 0,5, q est compris entre 0 et 0,7.

2. Solide cristallisé IM-12 selon la revendication 1 dans lequel X est le silicium.

3. Solide cristallisé IM-12 selon la revendication 1 ou 2 dans lequel Z est l'aluminium.

4. Solide cristallisé IM-12 selon l'une des revendications 1 à 3 dans lequel m est compris entre 0,05 et 0,5, p est compris entre 0 et 0,4, q est compris entre 0,01 et 0,7, le rapport {(1+m)/p} est supérieur ou égal à 5.

5. Procédé de préparation d'un solide cristallisé IM-12 selon l'une des revendications 1 à 4 consistant à procéder au mélange d'au moins une source d'au moins un oxyde XO₂, éventuellement d'au moins une source de l'oxyde YO₂, éventuellement d'au moins une source d'au moins un oxyde Z₂O₃, d'au moins un cation organique azoté R, ou d'au moins un précurseur du cation organique azoté ou d'au moins un produit de décomposition du cation organique azoté puis à procéder au traitement hydrothermal dudit mélange jusqu'à ce que ledit solide cristallisé IM-12 se forme.

6. Procédé de préparation d'un solide cristallisé IM-12 selon la revendication 5 tel que la composition molaire du mélange réactionnel est telle que :
| | |
|---|---|
| (XO₂+YO₂)/Z₂O₃ : | au moins 5, |
| H₂O/(XO₂+YO₂): | 1 à 50, |
| R/(XO₂+YO₂) : | 0,1 à 3, |
| YO₂/XO₂ : | 0 à 1, |

7. Procédé de préparation selon la revendication 5 ou 6 tel que R est le cation (6*R*,10*S*)-6,10-dimethyl-5-azoniaspiro [4.5] décane.

8. Procédé de préparation selon l'une des revendications 5 à 7 tel que des germes sont additionnés dans le mélange réactionnel.

## Claims

1. IM-12 crystallized solid that exhibits an x-ray diffraction diagram that includes at least the lines that are inscribed in the table below:
| **dₕₖₗ (Å)** | **2 theta (°)** | **I/I_{O}** | **dₕₖₗ (Å)** | **2 theta (°)** | **I/I_{O}** |
|---|---|---|---|---|---|
| 14.40 | 6.13 | FF | 4.36 | 20.35 | ff |
| 12.60 | 7.00 | F | 4.24 | 20.93 | ff |
| 11.98 | 7.37 | f | 4.19 | 21.19 | ff |
| 10.69 | 8.27 | f | 4.14 | 21.45 | ff |
| 9.22 | 9.58 | f | 4.06 | 21.87 | ff |
| 8.22 | 10.76 | ff | 3.98 | 22.29 | ff |
| 7.91 | 11.17 | ff | 3.95 | 22.47 | ff |
| 7.37 | 12.00 | ff | 3.93 | 22.60 | ff |
| 7.19 | 12.29 | ff | 3.91 | 22.68 | ff |
| 7.00 | 12.64 | ff | 3.75 | 23.69 | ff |
| 6.30 | 14.05 | ff | 3.72 | 23.88 | ff |
| 6.12 | 14.46 | ff | 3.68 | 24.14 | ff |
| 5.98 | 14.80 | ff | 3.62 | 24.56 | ff |
| 5.66 | 15.64 | ff | 3.59 | 24.73 | ff |
| 5.32 | 16.65 | ff | 3.53 | 25.16 | ff |
| 5.18 | 17.10 | ff | 3.49 | 25.47 | ff |
| 5.07 | 17.48 | ff | 3.39 | 26.20 | ff |
| 5.02 | 17.65 | ff | 3.35 | 26.55 | ff |
| 4.60 | 19.28 | ff | 3.28 | 27.11 | ff |
| 4.56 | 19.45 | ff | 3.23 | 27.52 | ff |
where FF = very high; m = mean; f = low; F= high; mf = medium low; ff = very low and that exhibits a chemical composition that is expressed on an anhydrous base, in terms of oxide moles, defined by the following general formula: XO₂ : m YO₂ : p Z₂O₃: q R_{2/n}O in which R represents one or more cation(s) of valence n, X represents one or more different tetravalent element(s) of germanium, Y represents germanium, Z represents at least one trivalent element, whereby m, p and q respectively represent the mole number of YO₂, Z₂O₃ and R_{2/n}O, and m is between 0 and 1, p is between 0 and 0.5, and q is between 0 and 0.7.

2. IM-12 crystallized solid according to claim 1 in which X is silicon.

3. IM-12 crystallized solid according to claim 1 or 2 in which Z is aluminum.

4. IM-12 crystallized solid according to one of claims 1 to 3, in which m is between 0.05 and 0.5, p is between 0 and 0.4, q is between 0.01 and 0.7, and the ratio {(1+m)/p} is greater than or equal to 5.

5. Process for the preparation of an IM-12 crystallized solid according to one of Claims 1 to 4 consisting in initiating the mixing of at least one source of at least one XO₂ oxide, optionally at least one source of the YO₂ oxide, optionally at least one source of at least one Z₂O₃ oxide, at least one nitrogen-containing organic cation R, or at least one precursor of the nitrogen-containing organic cation or at least one decomposition product of the nitrogen-containing organic cation and then in initiating the hydrothermal treatment of said mixture until said IM-12 crystallized solid is formed.

6. Process for the preparation of an IM-12 crystallized solid according to claim 5, such that the molar composition of the reaction mixture is such that:
| | |
|---|---|
| (XO₂+YO₂)/Z₂O₃: | at least 5, |
| H₂O/(XO₂+YO₂): | 1 to 50, |
| R/(XO₂+YO₂) : | 0.1 to 3, |
| YO₂/XO₂ : | 0 to 1. |

7. Process of preparation according to claim 5 or 6 such that R is the cation (6*R*, 1*S*)-6,10-dimethyl-5-azoniaspiro[4,5]decane.

8. Process of preparation according to one of claims 5 to 7, such that seeds are added into the reaction mixture.

## Patentansprüche

1. Kristallisierter IM-12-Feststoff, der ein Röntgenbeugungsdiagramm aufweist, das mindestens die Linien enthält, die in der nachfolgenden Tabelle eingetragen sind:
| dₕₖₗ(Å) | 2 theta (°) | I/I₀ | dₕₖₗ(Å) | 2 theta (°) | I/I₀ |
|---|---|---|---|---|---|
| 14,40 | 6,13 | FF | 4,36 | 20,35 | ff |
| 12,60 | 7,00 | F | 4,24 | 20,93 | ff |
| 11,98 | 7,37 | f | 4,19 | 21,19 | ff |
| 10,69 | 8,27 | f | 4,14 | 21,45 | ff |
| 9,22 | 9,58 | f | 4,06 | 21,87 | ff |
| 8,22 | 10,76 | ff | 3,98 | 22,29 | ff |
| 7,91 | 11,17 | ff | 3,95 | 22,47 | ff |
| 7,37 | 12,00 | ff | 3,93 | 22,60 | ff |
| 7,19 | 12,29 | ff | 3,91 | 22,68 | ff |
| 7,00 | 12,64 | ff | 3,75 | 23,69 | ff |
| 6,30 | 14,05 | ff | 3,72 | 23,88 | ff |
| 6,12 | 14,46 | ff | 3,68 | 24,14 | ff |
| 5,98 | 14,80 | ff | 3,62 | 24,56 | ff |
| 5,66 | 15,64 | ff | 3,59 | 24,73 | ff |
| 5,32 | 16,65 | ff | 3,53 | 25,16 | ff |
| 5,18 | 17,10 | ff | 3,49 | 25,47 | ff |
| 5,07 | 17,48 | ff | 3,39 | 26,20 | ff |
| 5,02 | 17,65 | ff | 3,35 | 26,55 | ff |
| 4,60 | 19,28 | ff | 3,28 | 27,11 | ff |
| 4,56 | 19,45 | ff | 3,23 | 27,52 | ff |
wobei FF = sehr hoch; m = mittel ; f = niedrig ; F = hoch; mf = mittel hoch; ff = sehr niedrig ist, und eine chemische Zusammensetzung aufweist, ausgedrückt auf einer wasserfreien Basis in MolOxid, definiert durch die folgende allgemeine Formel: XO₂: m YO₂: p Z₂O₃: q R_{2/n}O, worin R für ein oder mehrere Kation(en) mit der Valenz n steht, X für ein oder mehrere tetravalente(s) Element(e) steht, das (die) nicht Germanium ist (sind), Y für Germanium steht, Z für mindestens ein trivalentes Element steht, m, p, q jeweils für die Molzahl von YO₂, Z₂O₃ und R_{2/n}O steht und m im Bereich zwischen 0 und 1, p im Bereich zwischen 0 und 0,5, q im Bereich zwischen 0 und 0,7 liegt.

2. Kristallisierter IM-12-Feststoff nach Anspruch 1, wobei X Silicium ist.

3. Kristallisierter IM-12-Feststoff nach Anspruch 1 oder 2, wobei Z Aluminium ist.

4. Kristallisierter IM-12-Feststoff nach einem der Ansprüche 1 bis 3, wobei m im Bereich zwischen 0,05 und 0,5, p im Bereich zwischen 0 und 0,4, q im Bereich zwischen 0,01 und 0,7 liegt, wobei das Verhältnis {(1+m)/p} größer oder gleich 5 ist.

5. Verfahren zur Herstellung eines kristallisierten IM-12-Feststoff nach einem der Ansprüche 1 bis 4, das darin besteht, mindestens eine Quelle mindestens eines Oxids XO₂, gegebenenfalls mindestens eine Quelle des Oxids YO₂, gegebenenfalls mindestens eine Quelle eines Oxids Z₂O₃, mindestens ein organisches stickstoffhaltiges Kation R, oder mindestens einen Vorläufer des organischen stickstoffhaltigen Kations oder mindestens ein Abbauprodukt des organischen stickstoffhaltigen Kations zu mischen, dann die diese Mischung hydrothermisch zu behandeln bis sich der kristallisierte IM-12-Feststoff bildet.

6. Verfahren zur Herstellung eines kristallisierten IM-12-Feststoffs nach Anspruch 5, so dass die Molzusammensetzung der Reaktionsmischung folgendermaßen ist:
| | |
|---|---|
| (XO₂+YO₂)/Z₂O₃ : | mindestens 5, |
| H₂O/(XO₂+YO₂) : | 1 bis 50, |
| R/(XO₂+YO₂) : | 0,1 bis 3, |
| YO₂/XO₂ : | 0 bis 1. |

7. Verfahren zur Herstellung nach Anspruch 5 oder 6, so dass R das Kation (6R,10S)-6,10-Dimethyl-5-azoniaspiro[4.5]decan ist.

8. Verfahren zur Herstellung nach einem der Ansprüche 5 bis 7, so dass der Reaktionsmischung Keime zugefügt werden.
